(19) **Europäisches Patentamt**

**European Patent Office**

**Office européen des brevets**

(11) **EP 0 778 507 B1**

(12) **EUROPÄISCHE PATENTSCHRIFT**

(45) Veröffentlichungstag und Bekanntmachung des Hinweises auf die Patenterteilung:
**27.02.2002 Patentblatt 2002/09**

(51) Int Cl.7: **G05D 1/02**

(21) Anmeldenummer: **96117558.5**

(22) Anmeldetag: **02.11.1996**

(54) **Verfahren zur Geschwindigkeitsregelung eines Kraftfahrzeuges**

Method for controlling the speed of a vehicle

Procédé pour commander la vitesse d'un véhicule

(84) Benannte Vertragsstaaten:
**DE ES FR GB**

(30) Priorität: **04.12.1995 DE 19545116**

(43) Veröffentlichungstag der Anmeldung:
**11.06.1997 Patentblatt 1997/24**

(73) Patentinhaber: **Volkswagen Aktiengesellschaft**
**38436 Wolfsburg (DE)**

(72) Erfinder:
• **Werner, Michael, Dipl.-Ing.**
**38518 Gifhorn (DE)**
• **Andreas, Peter, Dipl.-Ing.**
**38518 Gifhorn (DE)**

(56) Entgegenhaltungen:
DE-A- 4 300 941    DE-A- 4 341 689
DE-A- 19 505 288    DE-A- 19 506 364
DE-A- 19 511 210

EP 0 778 507 B1

**Beschreibung**

Die Erfindung betrifft ein Verfahren zur Geschwindigkeitsregelung eines Kraftfahrzeuges, bei dem von einem im Kraftfahrzeug befindlichen Abstandssensor vor dem Kraftfahrzeug befindliche Objekte erfaßt und der Abstand zwischen dem Kraftfahrzeug und dem erfaßten Objekt ermittelt wird.

Es ist bekannt, mit unterschiedlichen Sensoreinrichtungen vor einem Kraftfahrzeug befindliche Hindernisse zu erfassen und entsprechend einer vorliegenden Gefahrensituation den Fahrzeugführer über eine Anzeige zu warnen, oder die gefahrene Geschwindigkeit entsprechend der Gefahrensituation zu verringern. An die verwendeten Sensoreinrichtungen werden dabei hohe Anforderungen gestellt. Es wurde vorgeschlagen, Radareinrichtungen zu verwenden, die elektromagnetische Wellen hoher Richtwirkung abstrahlen und die von den erfaßten Hindernissen reflektierten Wellen empfangen. Die Einstellung der Fahrgeschwindigkeit aufgrund des so gemessenen Abstandes ist jedoch in bestimmten Fahrsituationen problematisch. Durchfährt das Kraftfahrzeug eine Kurve, werden von der Sensoreinrichtung neben den tatsächlich vor dem Kraftfahrzeug befindlichen Hindernissen auch solche Objekte erfaßt, welche sich auf der anderen Fahrspur oder am Straßenrand befinden und deren Abstand zur Berechnung des Geschwindigkeits-Sollwertes verwendet, da diese Objekte sich zu bestimmten Zeitpunkten tatsächlich vor dem Kraftfahrzeug befinden.

Zur Lösung dieses Problems wird in der deutsche Offenlegungsschrift DE 43 41 689 A1 vorgeschlagen, aus dem ermittelten Abstand zwischen dem den Abstandssensor aufweisendem Kraftfahrzeug und dem erfaßten Hindernis, einer berechneten Abstandsänderung und eine Relativgeschwindigkeitsänderung zu ermitteln, ob es sich bei dem erfaßten Objekt um ein bewegtes Objekt handelt. Ist dies der Fall wird der Radius der Krümmung der Straße, basierend auf dem Lenkwinkel des Kraftfahrzeuges mathematisch bestimmt. In einem folgenden Schritt wird ein Intervall zwischen der Mittellinie der gekrümmten Straße und einer ausgedehnten länglichen Mittellinie des Kraftfahrzeuges berechnet. Weiterhin werden die linken und rechten Grenzen des erfaßten Bereichs des Abstandssensors auf der Linie, welche sich senkrecht zu der länglichen Mittellinie an der Stelle des erfaßten Abstandes erstreckt, bestimmt. Sie stellen das Verhältnis der Erfassungsgrenze bezüglich eines erfaßten Abstandes dar.

Darauffolgend wird eine Verteilung der Wahrscheinlichkeit eines vorausfahrenden Kraftfahrzeuges in einer Beziehung zu dem erfaßten Abstand und dem Krümmungsradius vorgesehen. Die Verteilung der Wahrscheinlichkeit enthält eine mittlere Zone, welche eine 100 %ige Wahrscheinlichkeit für ein in der Fahrspur befindliches Fahrzeug anzeigt, und Seitenzonen mit geringerer Wahrscheinlichkeit. Im weiteren wird die so bereitgestellte Mittellinie der Wahrscheinlichkeitsverteilung bezüglich eines vorausfahrenden Kraftfahrzeuges ins Innere der gekrümmten Straße durch das hergeleitete Intervall verschoben und Zufallsvariablen innerhalb des erfaßten Bereichs des Abstandssensors werden gemittelt, um die Wahrscheinlichkeit bezüglich eines vorausfahrenen Kraftfahrzeuges, daß es sich dabei um ein vorausfahrendes Kraftfahrzeug handelt, zu bestimmen. Anhand der ermittelten Wahrscheinlichkeit wird nun die Geschwindigkeitsregelung durchgeführt.

Wurde anhand der Relativgeschwindigkeitsänderung entschieden, daß es sich bei dem vor dem Kraftfahrzeug befindlichen Objekt um kein Fahrzeug handelt, wird eine Sollveränderungsrate der Geschwindigkeit passierend auf dem Abstand zu dem erfaßten Objekt bestimmt.

Bei dem beschriebenen Verfahren wird also bei einem sich nicht bewegenden Objekt keine "Kurvenermittlung" durchgeführt, sondern immer eine Geschwindigkeitsreduzierung vorgenommen, wenn der Abstand zu dem erfaßten feststehenden Objekt unterhalb eines Schwellwertes sinkt. Gerade aber bei einer Kurvenfahrt befinden sich laufend feststehende Objekte (Leitpfosten, Bäume u. s. w.) vor dem Kraftfahrzeug.

Die Aufgabe der Erfindung ist es nun, ein Verfahren, bei dem die Geschwindigkeitsregelung zumindest auf der Basis eines ermittelten Abstandes zu einem vor dem Kraftfahrzeug befindlichem Objekt erfolgt, zu schaffen, daß auch bei Kurvenfahrten und vor dem Kraftfahrzeug befindlichen, stehenden Objekt sicher zur Anwendung kommen kann und welches auf einfache Weise zu realisieren ist.

Die Aufgabe wird durch die Merkmale des Patentanspruches gelöst, vorteilhafte Aus- und Weiterbildungen sind in den Unteransprüchen dargestellt.

Erfindungsgemäß wird aus dem ermittelten Abstand zwischen dem erfaßten Objekt und dem mit der Geschwindigkeitsregelung ausgestatteten Kraftfahrzeug ein fiktiver Kurvenradius der befahrenen Strecke bestimmt und in Abhängigkeit des fiktiven Kurvenradiuses ein Geschwindigkeitssollwert zur Berechnung mindestens einer Stellgröße zur Einstellung der Fahrgeschwindigkeit des Kraftfahrzeuges ermittelt.

Die Erfindung geht dabei von der bekannten Tatsache aus, daß ein Fahrzeugführer beim Durchfahren einer Kurve in Abhängigkeit des Kurvenradiuses die Fahrgeschwindigkeit einstellt. Dies geschieht derart, daß bei großen Kurvenradien eine größere Geschwindigkeit und bei kleineren Kurvenradien eine geringere Geschwindigkeit gewählt wird.

Durchfährt nun das Kraftfahrzeug eine Kurve, erfaßt der Abstandssensor nicht nur ein vorausfahrendes Kraftfahrzeug, sondern kurzzeitig auch solche Objekte, die sich auf der anderen Fahrzeugspur beziehungsweise am Straßenrand befinden. Diese Objekte werden während sie sich im Erfassungsbereich des Sensors befinden, als tatsächlich auf der Fahrspur des Kraftfahrzeuges befindliche Hindernisse betrachtet und die Fahrgeschwindigkeit entsprechend des aufgrund des Abstandes ermittelten fiktiven Kurvenradiuses eingestellt.

Befindet sich ein stehendes Objekt, beispielsweise ein haltender Bus, auf der Fahrbahn, wird aufgrund der sich immer weiter verringernden Abstandes auch der fiktiv angenommene Kurvenradius immer kleiner, dementsprechend auch die Fahrgeschwindigkeit des Kraftfahrzeuges, so daß das Kraftfahrzeug vor dem Hindernis zum Stehen kommt.

Gemäß einer Weiterbildung der Erfindung wird der fiktive Kurvenradius aus dem gemessenen Abstand zwischen dem Kraftfahrzeug und dem erfaßten Objekt und einem Abstand des Kraftfahrzeuges zum Rand der Straße berechnet. Dabei wird der Abstand des Kraftfahrzeuges zum Rand der Straße vorteilhafterweise als die halbe Breite einer Fahrspur angenommen.

Die Beziehung nach der sich der fiktive Kurvenradius berechnet, kann lauten:

$$R = \frac{a^2 + B^2}{2B}$$

wobei a der Abstand zum Hindernis und B die halbe Breite der Fahrspur ist.

Ist neben dem in Abhängigkeit des fiktiven Kurvenradiuses berechneten Geschwindigkeitssollwert ein Geschwindigkeitssollwert von dem Führer des Kraftfahrzeuges manuell eingebbar und/oder wird in Abhängigkeit des Verlaufs der befahrenen Strecke ein weiterer Geschwindigkeitssollwert berechnet, werden alle Geschwindigkeitssollwerte miteinander verglichen und die Stellgröße zur Einstellung der Fahrgeschwindigkeit in Abhängigkeit des kleinsten der Geschwindigkeits-Sollwerte ermittelt.

Nachfolgend wird die Erfindung anhand eines Ausführungsbeispiels näher beschrieben. Die zugehörigen Zeichnungen zeigen:

Figur 1    ein Ausschnitts eines Streckenverlaufes,

Figur 2    eine geometrische Darstellung der Berechnung des fiktiven Kurvenradiuses,

Figur 3    ein Blockschaltbild einer Geschwindigkeitsregelung mit Ermittlung des Kurvenverlaufs der befahrenen Strecke und

Figur 4    ein Blockschaltbild einer Geschwindigkeitsregelung ohne Ermittlung des Kurvenverlaufs der befahrenen Strecke.

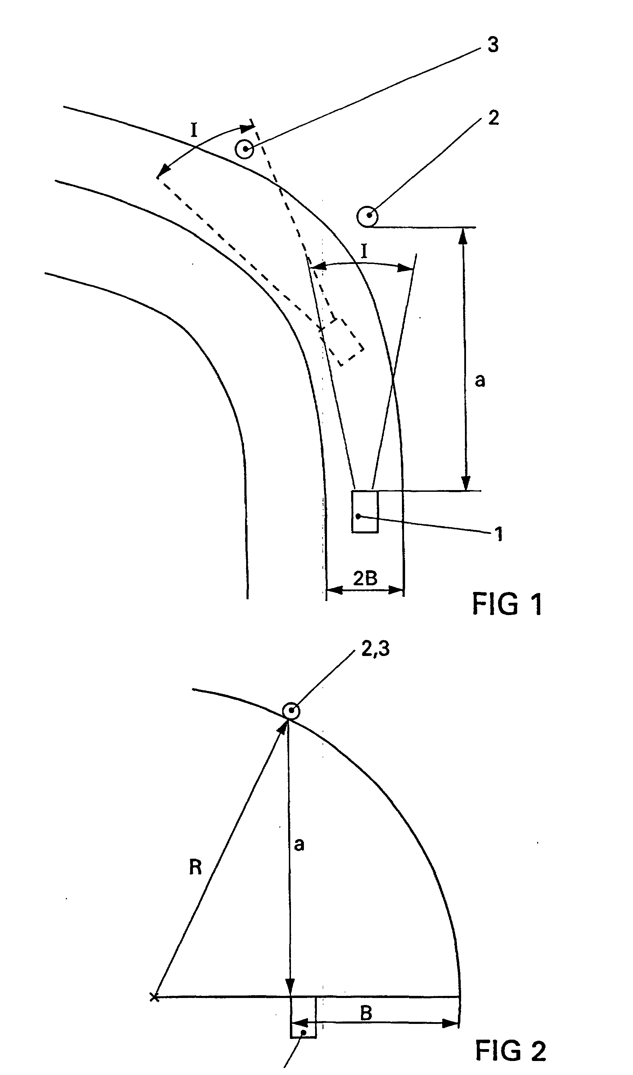

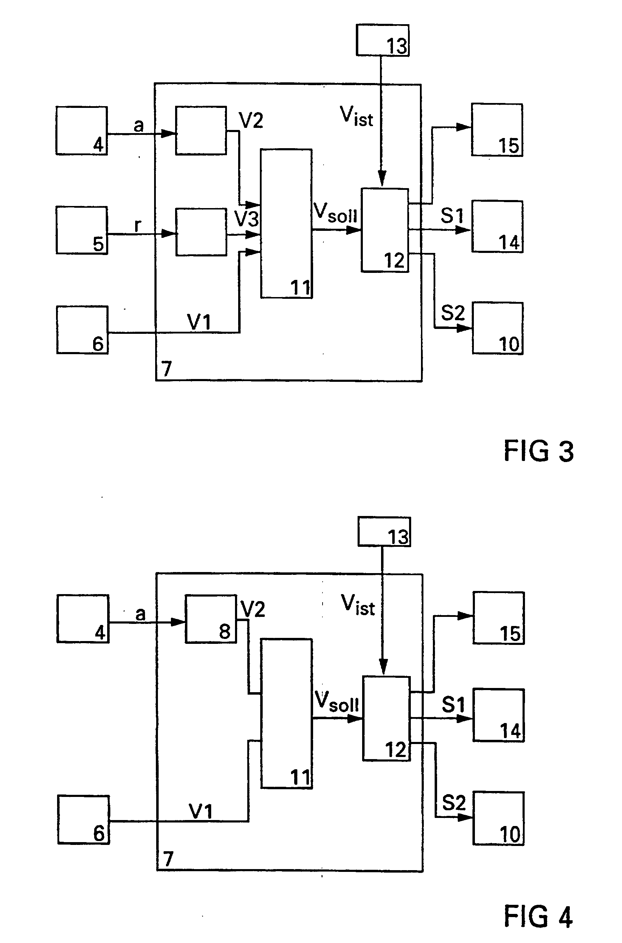

In Figur 1 wird ein mit einer Geschwindigkeitsregelungsanlage ausgestattetes Kraftfahrzeug 1 auf einem kurvenförmigen Abschnitt einer Straße gezeigt. Der in Figur 3 dargestellte Abstandssensor 4 des Kraftfahrzeuges übersteigt dabei den Bereich I, erfaßt dabei für eine gewisse Zeitspanne das am Straßenrand befindliche Objekt 2 und bewertet es als ein vor dem Kraftfahrzeug befindliches Hindernis, obwohl das Objekt 2 nicht in der Fahrspur des Kraftfahrzeuges liegt und keine Beachtung für die Geschwindigkeitsregelung finden dürfte. Gleichzeitig wird der momentane Abstand a zwischen dem erfaßten Objekt 2 und dem Kraftfahrzeug 1 ermittelt und eine Regeleinrichtung 7 übergeben, in deren Modul 8 gemäß der Erfindung in Abhängigkeit des Abstandes a und der konstant angenommenen halben Fahrspurbreite B ein fiktiver Kurvenradius R, ausgehend von der Annahme, daß sich das Fahrzeug in einer Kurve befindet (was in Fig. 1 tatsächlich der Fall ist), berechnet wird. Die entsprechende Beziehung (Figur 2) lautet

$$R = \frac{a^2 + B^2}{2B}.$$

In Abhängigkeit dieses fiktiv angenommenen Kurvenradiuses R wird im Modul 8 ein Geschwindigkeitssollwert V2 berechnet.

Wie aus der Beziehung der Figur 2 entnehmbar ist, verringert sich der fiktive Kurvenradius R mit geringer werdenden Abstand a und dementsprechend auch der Geschwindigkeitssollwert V2, bis das Objekt 2 (Figur 1) aus dem Erfassungsbereich I des Abstandssensors verschwindet, jetzt wird der Abstand a als unendlich angesehen und kein Geschwindigkeitssollwert, basierend auf dem Abstand, berechnet. Kurze Zeit später wird vom Abstandssensor 4 das sich ebenfalls am Straßenrand befindliche Objekt 3 erfaßt und entsprechend ein fiktiver Kurvenradius R in Abhängigkeit des Abstandes a zu diesem Objekt berechnet und ein entsprechender Geschwindigkeitssollwert V2 eingestellt.

Gleiches gilt auch bei einer Fahrt des Kraftfahrzeuges auf einer geraden Strecke, wobei hier nur tatsächlich auf der Fahrspur befindliche Objekte als Hindernisse erkannt werden. Es spielt jedoch keine Rolle, ob es sich dabei um ein sich bewegendes oder ein stehendes Objekt handelt.

In Figur 3 wird neben dem über den fiktiven Kurvenradius R berechneten Geschwindigkeitssollwert V2 vom Fahrzeugführer ein weiterer Geschwindigkeitssollwert V1 manuell eingegeben. Dieser repräsentiert die vom Fahrzeugführer gewünschte Reisegeschwindigkeit. Weiterhin ist eine Einrichtung zur Ermittlung des tatsächlichen Verlaufes der befahrenen Strecke, d. h. der Kurvenradien r, vorgesehen. Die Ermittlung der Kurvenradien kann über unterschiedliche Sensoren, beispielsweise einem Lenkwinkelsensor oder den einzelnen Rädern des Kraftfahrzeuges zugeordneten Raddrehzahlsensoren, erfolgen. Eine weitere Möglichkeit besteht darin, diese Kurvenradien r der befahrenden Strecke aus vorhandenen Datensätzen (digital abgespeicherten Karten) zu entnehmen. In Abhängigkeit der Kurvenradien r wird im Modul 9 ein dritter Geschwindigkeitssollwert V3 berechnet, der die für den entsprechenden Kurvenradius r maximal zulässige Fahrgeschwindigkeit wiedergibt.

Die einzelnen Geschwindigkeitssollwerte V1 bis V3 werden einer Vergleichseinrichtung 11 zugeleitet, die den kleinsten der Geschwindigkeitssollwerte auswählt und einer Einrichtung 12 als momentanen Geschwindigkeitssollwert $V_{soll}$ zuführt. Außerdem wird von der Sensoreinrichtung 13 der Geschwindigkeitsistwert $V_{ist}$ erfaßt und ebenfalls an die Einrichtung 12 abgegeben. Die Einrichtung 12 bildet in Abhängigkeit Differenz zwischen dem Geschwindigkeitssollwert $V_{soll}$ und dem Geschwindigkeitsistwert $V_{ist}$ eine Stellgröße S1, S2 für die Leistungsbildung der Brennkraftmaschine 14 und/ oder für die Bremseinrichtung 10 des Kraftfahrzeuges. Gleichzeitig kann eine Warnung über eine Anzeigeeinrichtung 15 an den Fahrzeugführer ausgegeben werden.

Bei der Abstandsregelungsanlage der Figur 4 wird von der Annahme ausgegangen, daß in jeder Kurve genügend am Straßenrand befindliche Objekte 2, 3, wie Bäume, Leitpfosten und ähnliche, vom Abstandssensor 4 des Kraftfahrzeuges erfaßt werden können. In diesem Fall werden beim Durchfahren einer Kurve diese Objekte 2, 3 nacheinander vom Abstandssensor erfaßt und in Abhängigkeit ihres Abstandes a zum Kraftfahrzeug jeweils ein fiktiv angenommener Kurvenradius R gemäß der geometrischen Beziehung der Figur 2 bestimmt. Aus den fiktiven Kurvenradien R wird dann im Modul 8 der Regeleinrichtung 7 der Geschwindigkeitssollwert V2 berechnet, der sowohl den Abstand a für ein auf der Fahrspur befindliches Hindernis als auch das Durchfahren einer Kurve berücksichtigt, so daß auf eine Erfassung der tatsächlichen Kurvenradien der befahrenen Strecke verzichtet werden kann. In der Vergleichseinrichtung 11 findet dann nur noch ein Vergleich der vom Fahrer manuell über die Eingabeeinrichtung 6 eingegebenen Geschwindigkeitssollwertes V1 mit dem Geschwindigkeitssollwert V2 statt, wobei auch hier der kleinere der beiden Geschwindigkeitssollwerte als Geschwindigkeits-Sollwert $V_{soll}$ der Einrichtung 12 zur Bildung einer Stellgröße es für die Brennkraftmaschine 14 beziehungsweise die Bremseinrichtung 10 des Kraftfahrzeuges zugeleitet wird.

**BEZUGSZEICHEN**

| 1 | Kraftfahrzeug |
|---|---|
| 2, 3 | Objekt, Hindernis |
| 4 | Abstandssensor |
| 5 | Einrichtung zur Ermittlung des Kurvenradiuses der befahrenen Strecke |
| 6 | manuelle Eingabeeinrichtung |
| 7 | Regeleinrichtung |
| 8, 9 | Module zur Berechnung der Geschwindigkeitssollwerte |
| 10 | Bremseinrichtung |
| 11 | Vergleichseinrichtung |
| 12 | Einrichtung zur Berechnung der Stellgrößen |
| 13 | Einrichtung zur Erfassung des Geschwindigkeitsistwertes |
| 14 | Brennkraftmaschine |
| 15 | Warneinrichtung |
| a | Abstand |
| B | halbe Fahrspurbreite |
| R | fiktiver Kurvenradius |
| r | tatsächlicher Kurvenradius |
| V1, V2, V3, | Geschwindigkeitssollwerte |
| $V_{soll}$ | Geschwindigkeitssollwert |
| $V_{ist}$ | Geschwindigkeitsistwert |
| S | Stellgröße |

**Patentansprüche**

1. Verfahren zur Geschwindigkeitsregelung für ein Kraftfahrzeug, bei dem von einem im Kraftfahrzeug befindlichen Abstandssensor vor dem Kraftfahrzeug befindliche Objekte erfaßt und der Abstand zwischen dem Kraftfahrzeug und dem erfaßten Objekt ermittelt und einer Regeleinrichtung, welche mindestens eine Stellgröße zur Einstellung der Fahrgeschwindigkeit bildet, zugeleitet wird, **dadurch gekennzeichnet, daß** in der Regeleinrichtung (7) aus dem Abstand (a) zwischen dem erfaßten Objekt (2, 3) und dem Kraftfahrzeug (1) ein fiktiver Kurvenradius (R) der befahrenen Strecke ermittelt wird und in Abhängigkeit des fiktiven Kurvenradiusses (R) ein Geschwindigkeitssollwert (V2) zur Ermittlung der Stellgröße (S1, S2) für die Fahrgeschwindigkeit des Kraftfahrzeuges berechnet wird.

2. Verfahren nach Anspruch 1, **dadurch gekennzeichnet, daß** der fiktive Kurvenradius (R) aus dem gemessenen Abstand (a) zwischen dem erfaßten Objekt (2,3) und dem Kraftfahrzeug (1) und einem Abstand (B) des Kraftfahrzeuges zum Rand der befahrenen Strecke berechnet wird.

3. Verfahren nach Anspruch 2, **dadurch gekennzeichnet, daß** als Abstand (B) des Kraftfahrzeuges zum Rand der befahrenen Strecke die halbe Breite einer Fahrspur angenommen wird.

4. Verfahren nach Anspruch 2 oder 3, **dadurch gekennzeichnet, daß** der Kurvenradius (R) nach der Formel:

$$R = \frac{a^2 + B^2}{2B}$$

berechnet wird.

5. Verfahren nach einem der Ansprüche 1 bis 4, **dadurch gekennzeichnet, daß** weiterhin ein Geschwindigkeitssollwert (V1) manuell vom Fahrzeugführer eingegeben wird, der in der Regeleinrichtung (7) mit dem in Abhängigkeit des fiktiven Kurvenradiusses (R) berechneten Geschwindigkeitssollwert (V2) verglichen wird, und in Abhängigkeit dieses Vergleiches die Stellgröße (S1, S2) zur Einstellung der Fahrgeschwindigkeit ermittelt wird.

**6.** Verfahren nach Anspruch 5, **dadurch gekennzeichnet, daß** in Abhängigkeit des Verlaufs (r) der befahrenen Strecke ein weiterer Geschwindigkeitssollwert (V3) in der Regeleinrichtung (7) berechnet und mit den Geschwindigkeitssollwerten (V1, V2) verglichen wird und in Abhängigkeit dieses Vergleiches die Stellgröße (S1, S2) zur Einstellung der Fahrgeschwindigkeit ermittelt wird

**Claims**

**1.** Method for controlling the speed of a motor vehicle, in which method objects located in front of the motor vehicle are detected by a distance sensor located in the motor vehicle and the distance between the motor vehicle and the object detected is determined and directed to a control device, which forms at least one adjusting variable for the purpose of adjusting the travel velocity, **characterised in that** the control device (7) determines from the distance (a) between the detected object (2,3) and the motor vehicle (1) a fictitious turning radius (R) of the stretch of road being driven on and in dependence upon the fictitious turning radius (R) a velocity desired value (V2) is calculated for the purpose of determining the adjusting variable (S1, S2) for the travel velocity of the motor vehicle.

**2.** Method in accordance with claim 1, **characterised in that** the fictitious turning radius (R) is calculated from the measured distance (a) between the detected object (2,3) and the motor vehicle (1) and a distance (B) of the motor vehicle to the edge of the road being driven on.

**3.** Method in accordance with claim 2, **characterised in that** the distance of half the width of one lane is assumed to be the distance (B) of the motor vehicle to the edge of the road being driven on.

**4.** Method in accordance with claim 2 or 3, **characterised in that** the turning radius (R) is calculated in accordance with the formula:

$$R = \frac{a^2 + B^2}{2B}$$

**5.** Method in accordance with any one of claims 1 to 4, **characterised in that** furthermore a velocity desired value (V1) is input manually by the vehicle driver, which velocity desired value is compared in the control device (7) with the velocity desired value (V2) which is calculated in dependence upon the fictitious turning radius (R) and in dependence upon this comparison the adjusting variable (S1, S2) is determined for the purpose of adjusting the travel velocity.

**6.** Method in accordance with claim 5, **characterised in that** in dependence upon the progression (r) of the road being driven on a further velocity desired value (V3) is calculated in the control device (7) and compared with the velocity desired values (V1, V2) and in dependence upon this comparison the adjusting variable (S1, S2) is determined for the purpose of adjusting the travel velocity.

**Revendications**

**1.** Procédé de régulation de vitesse d'un véhicule automobile, dans lequel des objets se trouvant devant le véhicule automobile sont détectés par un détecteur de distance disposé dans le véhicule automobile, et la distance entre le véhicule automobile et l'objet détecté est déterminée et transmise à un dispositif de régulation, qui forme au moins une grandeur de réglage pour la régulation de la vitesse de marche, **caractérisé en ce qu'**un rayon de virage fictif (R) du parcours emprunté est déterminé dans le dispositif de régulation (7) à partir de la distance (a) entre l'objet détecté (2, 3) et le véhicule automobile (1), et **en ce qu'**une valeur de consigne (V2) de la vitesse est calculée en fonction du rayon de virage fictif (R) pour la détermination de la grandeur de réglage (S1, S2) de la vitesse de marche du véhicule automobile.

**2.** Procédé selon la revendication 1, **caractérisé en ce que** le rayon de virage fictif (R) est calculé à partir de la distance (a) mesurée entre l'objet (2, 3) détecté et le véhicule automobile (1), et d'une distance (B) du véhicule automobile au bord du parcours emprunté.

**3.** Procédé selon la revendication 2, **caractérisé en ce qu'**il est pris comme hypothèse que la distance (B) du véhicule automobile au bord du parcours emprunté correspond à la moitié de la largeur d'une voie de circulation.

**4.** Procédé selon la revendication 2 ou 3, **caractérisé en ce que** le rayon de virage (R) est calculé selon la formule :

$$R = \frac{a^2 + B^2}{2B}.$$

5. Procédé selon l'une quelconque des revendications 1 à 4, **caractérisé en ce qu'**une valeur de consigne (V1) de la vitesse est par ailleurs entrée manuellement par le conducteur du véhicule, qui est comparée dans le dispositif de régulation (7) avec la valeur de consigne (V2) de la vitesse calculée en fonction du rayon de virage fictif (R), et **en ce que** la grandeur de réglage (S1, S2) pour la régulation de la vitesse de marche est déterminée en fonction de cette comparaison.

6. Procédé selon la revendication 5, **caractérisé en ce qu'**une autre valeur de consigne (V3) de la vitesse est calculée dans le dispositif de régulation (7) en fonction du tracé (r) du parcours emprunté, et est comparée avec les valeurs de consigne (V1, V2) de la vitesse, et **en ce que** la grandeur de réglage (S1, S2) pour la régulation de la vitesse de marche est déterminée en fonction de cette comparaison.

FIG 1

FIG 2

FIG 3

FIG 4